# EUROPÄISCHE PATENTSCHRIFT

(11) **EP 0 666 399 B1**
(45) Veröffentlichungstag und Bekanntmachung des Hinweises auf die Patenterteilung: **26.11.1997**
(21) Anmeldenummer: 95101319.2
(22) Anmeldetag: 01.02.1995
(51) Int. Cl.: E05F 15/16

(54) **Antriebsvorrichtung für ein zwischen Endstellungen verstellbares Teil eines Fahrzeuges**
Driving device for a between end positions moving member of a vehicle
Dispositif d'entraînement pour un élément d'un véhicule pouvant se déplacer entre des positions finales

(30) Priorität: 05.02.1994 DE 4403574
(43) Veröffentlichungstag der Anmeldung: 09.08.1995
(73) Patentinhaber: WEBASTO KAROSSERIESYSTEME GmbH, D-82131 Stockdorf (DE)
(72) Erfinder: Vordermaier, Claus, D-81243 München (DE)
(74) Vertreter: Wiese, Gerhard

(56) Entgegenhaltungen:
- EP-A- 0 410 487
- DE-A- 3 420 789
- DE-C- 4 021 973

## Beschreibung

Die Erfindung betrifft eine Antriebsvorrichtung für ein zwischen Endstellungen verstellbares Teil eines Fahrzeuges, insbesondere für einen Deckel eines öffnungsfähigen Fahrzeugdaches mit einem Elektromotor, der über ein Untersetzungsgetriebe mit einem auf einer Abtriebswelle angeordneten Ritzel verbunden ist, das seinerseits über Kraftübertragungsmittel mit dem verstellbaren Teil in Antriebsverbindung steht, sowie mit wenigstens einer den Elektromotor steuernden Schalteinrichtung zum Stillsetzen des Elektromotors in wenigstens einer vorbestimmten Stellung des verstellbaren Teils, wobei zur Betätigung der Schalteinrichtung ein Schaltrad eines Exzenterrädergetriebes vorgesehen ist, das über eine Antriebswelle mit dem Untersetzungsgetriebe in Antriebsverbindung steht.

Eine gattungsgemäße Antriebsvorrichtung ist aus der DE 40 21 973 C1 bekannt. Eine derartige Antriebsvorrichtung mit einem über ein Exzenterrädergetriebe angesteuerten Schaltelement für den antreibenden Elektromotor bietet bei einem relativ einfachen Aufbau eine hohe Schaltpräzision insbesondere für die Endlagen des zu verstellenden Teils. Nachteilig an der dort gezeigten Anordnung ist es, daß bei einem eventuellen Ausfall des Elektromotors keine Notbetätigungseinrichtung für ein manuelles Schließen des zu verstellenden Teils vorgesehen ist.

Eine Notbetätigungseinrichtung, bei der durch ein axiales Verschieben einer Antriebswelle während der manuellen Notbetätigung der Elektromotor abgekoppelt wird, ist aus der EP 0 410 487 A2 bekannt. Der dort gezeigte Antrieb weist allerdings keine koaxial zur Antriebswelle angeordneten Getriebeteile für eine Auslösung von Schaltvorgängen auf.

Bei einer anderen, im Hause der Anmelderin verwendeten Antriebsvorrichtung ist ein solches koaxial zur Antriebswelle angeordnetes Exzenterrädergetriebe zwar vorhanden, jedoch wird dieses bei einer Axialverschiebung der Antriebswelle während eines Notbetätigungsvorganges ebenso wie das mit dem Elektromotor gekoppelte Schneckenrad außer Eingriff gebracht. Dabei ergibt sich der Nachteil, daß nach einer Notbetätigung die für den normalen Antrieb vorgesehenen Getrieberäder und die für die Schaltbetätigungen vorgesehenen Getrieberäder ihre ursprüngliche exakt aufeinander abgestimmte Einstellposition verloren haben. Somit wird nach einer Notbetätigung, die unter Umständen gar nicht auf einen fehlerhaften Antrieb sondern auf Fehler in der Spannungsversorgung des Fahrzeuges zurückgeht, in jedem Falle ein kostspieliger Werkstattaufenthalt mit einer Neujustierung des gesamten Antriebes erforderlich.

Der vorliegenden Erfindung liegt die Aufgabe zugrunde, eine gattungsgemäße Antriebsvorrichtung so weiterzubilden, daß auch nach einer Notbetätigung keine Neujustierung bezüglich der Endlagenschaltung notwendig wird.

Diese Aufgabe wird gemäß der Erfindung durch die im Patentanspruch 1 angegebenen Merkmale gelöst. Dabei weist die Antriebswelle sowohl gegenüber einem vom Elektromotor angetriebenen Schneckenrad als auch gegenüber dem zur Betätigung der Schalteinrichtung vorgesehenen Exzenterrädergetriebe formschlüssige Mittel auf, die eine axiale Verschiebung derselben für eine Notbetätigung des Ritzels ermöglichen, wobei gleichzeitig das Exzenterrädergetriebe unverändert mit der Antriebswelle im Eingriff bleibt. Dies wird in einfacher Weise dadurch erreicht, daß die formschlüssigen Mittel zwischen Antriebswelle und Schneckenrad axial gesehen eine kürzere Erstreckung aufweisen als die formschlüssigen Mittel, die eine Verbindung der Antriebswelle zum Exzenterrädergetriebe herstellen. Somit bleiben die für die Betätigung der Schalter vorgesehenen Getriebeelemente des Exzenterrädergetriebes unabhängig von der Art des Antriebs, d.h. unabhängig davon ob der Elektromotor oder bei einer Axialverschiebung der Antriebswelle ein handbetriebenes Werkzeug das Ritzel betätigt, stets im Eingriff mit der Antriebswelle. Die Schaltelemente verstellen sich somit gegenüber den Endlagen des zu verstellenden Teiles nicht.

In einer vorteilhaften Ausgestaltung ist vorgesehen, daß die Antriebswelle unabhängig von ihrer axialen Lage über formschlüssige Mittel mit der das Ritzel antreibenden Abtriebswelle in Eingriff steht. Dies ist in einfacher und platzsparender Weise durch eine ineinandergreifende Außen- bzw. Innenverzahnung, beispielsweise in Form einer axial verlaufenden Kerbverzahnung möglich.

Eine betriebssichere und dennoch im Notbetätigungsfalle einfach zu handhabende Antriebsvorrichtung ergibt sich dadurch, daß die Antriebswelle mittels einer Feder zu ihrer Eingriffsposition mit dem Schneckenrad hin vorbelastet ist. Dadurch wird die den Grundzustand darstellende Eingriffsposition der Antriebswelle mit dem Schneckenrad unabhängig von der Einbaulage der Antriebsvorrichtung sicher gehalten. Andererseits ermöglicht ein leichter Druck gegen die vorspannende Feder ein einfaches Betätigen der Antriebswelle im Notfall.

Für eine platzsparende und sichere Unterbringung der Feder ist es vorteilhaft, wenn die Antriebswelle und die Abtriebswelle an ihren einander zugewandten Stirnseiten jeweils einen Hohlraum aufweisen, von welchem die Feder zumindestens an ihren Enden umgeben ist.

Für einen kompakten Aufbau der Antriebsvorrichtung und eine günstige Lagerung der Antriebswelle ist es vorteilhaft, wenn die Antriebswelle in ihrem Mittelteil einen im Durchmesser erweiterten Bund aufweist, an dessen Außenumfang die formschlüssigen Mittel zur Koppelung mit dessen komplementär dazu geformten Mitteln am Schneckenrad angeordnet sind.

Eine kompakte und leicht zu montierende Anordnung der Antriebsvorrichtung ergibt sich dadurch, daß die Abtriebswelle in einem fest in einem Gehäuseteil der Antriebsvorrichtung angeordneten buchsenartigen Antriebswellenlager gelagert ist, das an seiner der Antriebswelle zugewandten Unterseite einen erweiterten Aufnahmeraum für eine Aufnahme des Bundes bei einer axialen Verlagerung der Antriebswelle aufweist.

Schließlich ist es für eine einfache Bedienung im Notbetätigungsfalle vorteilhaft, wenn die Antriebswelle an ihrer von der Abtriebswelle abgewandten Stirnseite Mittel für einen formschlüssigen Eingriff eines Notbetätigungs-Werkzeuges aufweist.

Nachfolgend ist ein Ausführungsbeispiel der Erfindung anhand der Zeichnung beschrieben. Es zeigt:
- Fig. 1: einen Längsschnitt durch die Antriebs- bzw. Abtriebswelle einer Antriebsvorrichtung in ihrer normalen Betriebsposition,
- Fig. 2: eine Antriebsvorrichtung gemäß Fig. 1 in ihrer Notbetätigungsposition,
- Fig. 3: einen Querschnitt durch den unteren Teil der Antriebswelle und das Exzenterrad in Höhe der Schnittlinie III-III gemäß Fig. 1,
- Fig. 4: einen Querschnitt durch den Bund der Antriebswelle und das umgebende Schneckenrad in Höhe der Schnittlinie IV-IV gemäß Fig. 1 und
- Fig. 5: eine Stirnansicht der Antriebswelle von ihrer Unterseite gemäß dem Pfeil V in Fig. 1.

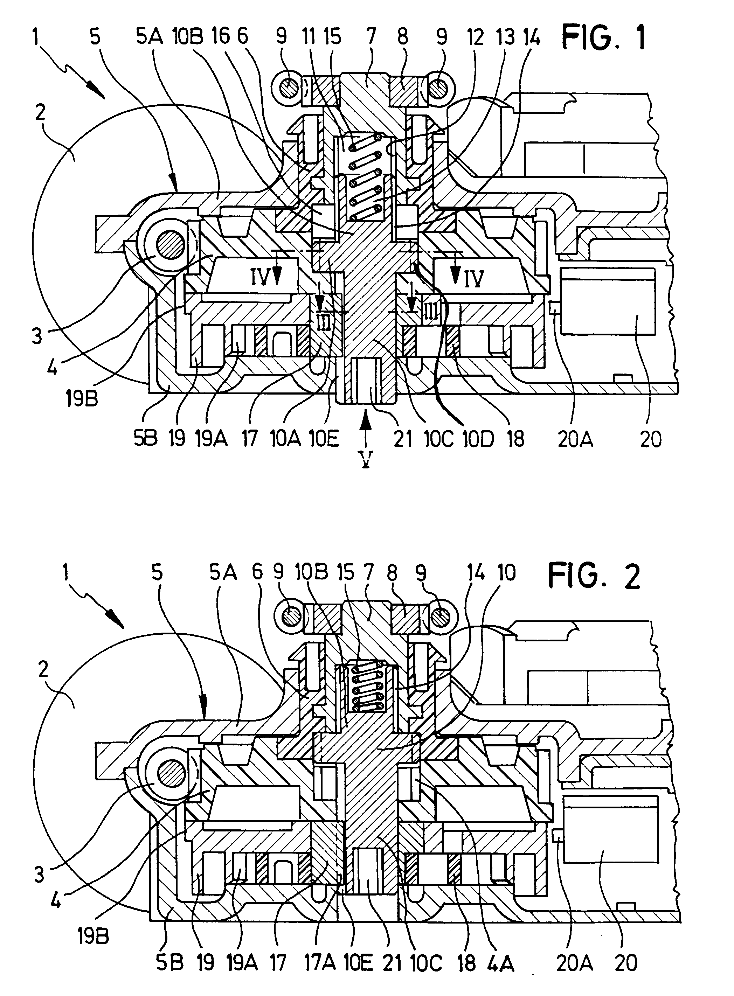

In Fig. 1 ist insgesamt eine Antriebsvorrichtung 1 dargestellt, wie sie beispielsweise zur Betätigung eines Schiebe-Hebedaches in einem Fahrzeug verwendet wird. Das dazu erforderliche Getriebe ist in einem insgesamt mit 5 bezeichneten Gehäuse untergebracht, das sich aus einem Gehäuseoberteil 5A und einem Gehäuseunterteil 5B zusammensetzt. Am Gehäuse 5 ist ein in Fig. 1 schematisch angedeuteter Elektromotor 2 angeflanscht oder mit einem Gehäuseteil einstückig angeformt. Der Elektromotor 2 treibt eine Schneckenwelle 3 an, die in den Fig. 1 und 2 stirnseitig im linken oberen Teil des Gehäuses einmündend erkennbar ist. Das Gehäuseoberteil 5A und das Gehäuseunterteil 5B weisen senkrecht zur Achse der Schneckenwelle koaxial zueinander angeordnete zylindrische Lagerbohrungen auf. In die Lagerbohrung des Gehäuseoberteils 5A ist ein buchsenartiges Abtriebswellenlager 6 mit umspritzter Kunststofflauffläche und Axialclip eingesetzt. Das Abtriebswellenlager 6 dient zur axial unverrückbaren drehbaren Lagerung einer Abtriebswelle 7, an deren Oberseite ein Ritzel 8 unverdrehbar befestigt ist.

Dieses Ritzel 8 steht mit seiner Außenverzahnung mit spiralförmig gezahnten Antriebskabeln 9 in Antriebsverbindung, welche ihrerseits an das zu verstellende Teil, also im vorliegenden Fall den Deckel des Schiebe-Hebedaches angekoppelt sind. In der Lagerbohrung des Gehäuseunterteils 5B ist koaxial zur Abtriebswelle 7 eine Antriebswelle 10 gelagert. Diese setzt sich aus einem unteren Schaft 10C, einem im Durchmesser erweiterten Bund 10A in ihrem Mittelteil und einem daran anschließenden oberen Schaft 10B zusammen. Der obere Schaft 10B weist an seinem Außenumfang eine axial verlaufende Kerbverzahnung 14 auf, welche mit einer an der Innenseite eines Hohlraumes 11 an der Abtriebswelle 7 vorgesehenen komplementär dazu geformten Innenverzahnung 12 im Eingriff steht. Die Kerbverzahnung 14 bzw. 12 erlaubt eine axiale Verschiebung der Antriebswelle 10 bezüglich der feststehenden Abtriebswelle 7 ohne daß deren Kraftübertragung am Umfang unterbrochen wird. Der obere Schaft 10B der Antriebswelle 10 weist ferner an seinem der Abtriebswelle 7 zugewandten stirnseitigen Ende einen Hohlraum 13 auf. In diesen Hohlraum 13 sowie in den Hohlraum 11 der Abtriebswelle 7 ist eine Feder 15 eingesetzt, welche die Antriebswelle 10 von der Abtriebswelle 7 wegdrückt, sodaß die Antriebswelle 10 in Richtung auf ihre in Fig. 1 dargestellte Grundposition vorbelastet wird.

Der in seinem Durchmesser gegenüber dem oberen Schaft 10B erweiterte Bund 10A der Antriebswelle 10 weist an seinem Außenumfang verteilt vier Klauen 10D auf. Diese stehen in der in Fig. 1 dargestellten Grundposition in Antriebsverbindung mit vier Nuten 4A an einem inneren Durchmesser eines Schneckenrades 4, welches mit seiner Außenverzahnung mit der Schneckenwelle 3 im Eingriff steht. Die Klauen 10D sind in den Nuten 4A axial beweglich. Ihre male Ausdehnung ist so bemessen, daß die Klauen 10D bei einer axialen Verlagerung der Antriebswelle 10 von der in Fig. 1 dargestellten Grundposition zu der in Fig. 2 dargestellten Notbetätigungsposition außer Eingriff geraten. Der im Durchmesser stärkere Bund 10A der Antriebswelle 10 verschiebt sich mit den Klauen 10D dann axial in einen Aufnahmeraum 16, der an der Unterseite des Abtriebswellenlagers 6 vorgesehen ist.

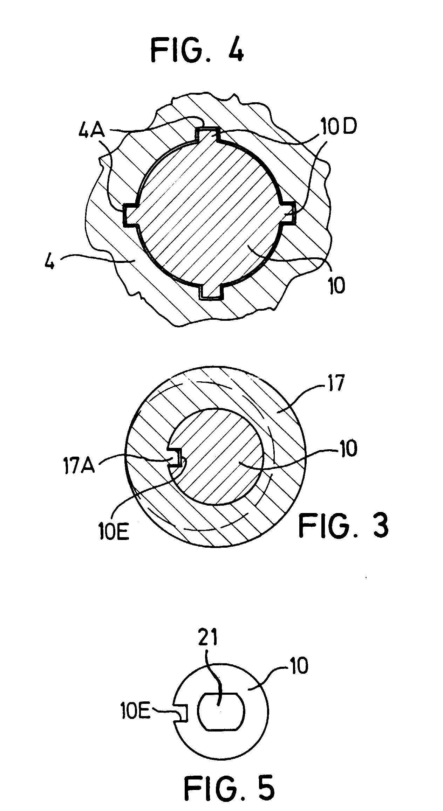

An den Bund 10A der Antriebswelle 10 schließt sich nach unten ein im Durchmesser verjüngter unterer Schaft 10C an. Dieser ist an seinem Außenumfang, wie den Fig. 3 und 5 zu entnehmen, mit einer über die gesamte Länge verlaufenden axialen Nut 10E versehen. Um den unteren Schaft 10C herum ist ein Exzenter 17 angeordnet, der über einen Mitnehmer 17A an seiner Innenseite mit der Nut 10E der Antriebswelle 10 in Eingriff steht. Der Mitnehmer 17A und die Nut 10E sind in ihrer axialen Ausdehnung so bemessen, daß sie auch bei einer Verlagerung der Antriebswelle 10 von der in Fig. 1 dargestellten Grundposition in die in Fig. 2 dargestellte Notbetätigungsposition nicht außer Eingriff geraten. Der Exzenter 17 setzt sich aus einem zylindrischen oberen Teil und einem exzentrischen unteren Teil zusammen. Auf dem exzentrischen unteren Teil ist ein Exzenterrad 18 drehbar gelagert. Auf dem zylindrischen oberen Teil des Exzenters 17 ist ein Schaltrad 19 gelagert. Das Schaltrad 19 wird über eine Innenverzahnung 19A vom Exzenterrad 18 weiter geschaltet. Es betätigt mit einem Schaltnocken 19B an seinem Außenumfang einen Schaltstößel 20A eines Mikroschalters 20, welcher vorzugsweise in den Endlagen des zu verstellenden Teils (Deckels) die Stromzufuhr zum Elektromotor 2 unterbricht.

Einzelheiten der Funktion des Exzenterrädergetriebes (Exzenter 17, Exzenterrad 18 und Schaltrad 19) sind der eingangs erwähnten DE 40 21 973 C1 zu entnehmen. Sie werden hier nicht im Detail abgehandelt, da zwar ihr Vorhandensein aber nicht ihre Funktion im einzelnen für die vorliegende Erfindung von Bedeutung sind.

Das der Abtriebswelle 7 abgewandte stirnseitige Ende des unteren Schaftes 10C der Antriebswelle 10 weist eine Aussparung 21 auf, in welche im Notbetätigungsfalle ein komplementär dazu geformtes Werkzeug eingeführt wird. Die Aussparung 21 kann wie vorgesehen als Zweiflach, jedoch auch als Vierkant oder Innensechskant ausgeführt sein. Varianten bezüglich der formschlüssigen Verbindung der Antriebswelle 10 zur Abtriebswelle 7, zum Schneckenrad 4 und zum Exzenter 17 sind ebenfalls im Belieben des Fachmannes. Statt der vorstehend beschriebenen Kerbverzahnung 12 bzw. 14, der Klauen/Nut-Verbindung 10D bzw. 4A und der Nut/Mitnehmer-Verbindung 10E bzw. 17A sind auch alle anderen dem Fachmann geläufigen Mittel einsetzbar, die eine axiale Verlagerung bei gleichzeitiger Aufrechterhaltung einer umfangsseitigen Antriebsverbindung gestatten. Nur beispielhaft seien hier eine Paßfederverbindung, eine Keilverbindung oder eine Polygonverbindung genannt.

Nachfolgend wird die Funktion der erfindungsgemäßen Antriebsvorrichtung beschrieben. Beim in Fig. 1 dargestellten Grundzustand treibt der Elektromotor 2 über die Schneckenwelle 3 das Schneckenrad 4 an. Das Schneckenrad 4 treibt über die Nuten 4A und die darin eingreifenden Klauen 10D (Fig. 4) die Antriebswelle 10 an. Der obere Schaft 10B der Antriebswelle 10 nimmt über seine Außenverzahnung 14 die Innenverzahnung 12 der Abtriebswelle 7 mit und treibt dadurch das auf dieser angeordnete Ritzel 8 an. Das Ritzel 8 treibt seinerseits die Antriebskabel 9, welche mit dem zu verstellenden Deckel gekoppelt sind. Gleichzeitig wird durch den unteren Schaft 10C über dessen Nut 10E und den Mitnehmer 17A der Exzenter 17 in Drehung versetzt. Das auf diesem gelagerte Exzenterrad 18 gerät bei jeder Umdrehung mit der Innenverzahnung 19A des Schaltrades 19 in Eingriff und dreht dieses um einen bestimmten Betrag weiter. Bei Erreichen einer vorbestimmten Endlage betätigt der am Außenumfang des Schaltrades 19 vorgesehene Schaltnocken 19B den Schaltstößel 20A des Mikroschalters 20, welcher seinerseits über ein nicht dargestelltes Steuergerät die Stromzufuhr zum Elektromotor 2 unterbricht.

Ist aus irgendeinem Grunde der Elektromotor 2 nicht betätigbar und soll dennoch das zu betätigende Teil, im vorliegenden Falle der Deckel, betätigt werden, so wird ein nicht dargestelltes Werkzeug in die Aussparung 21 am unteren Schaft 10C der Antriebswelle 10 eingeführt. Die Antriebswelle 10 wird gegen den Druck der Feder 15 axial nach oben bewegt, wobei die Klauen 10D außer Eingriff mit den Nuten 4A des Schneckenrades 4 geraten. Hingegen bleibt die Verzahnung 12 bzw. 14 zwischen Antriebswelle 10 und Abtriebswelle 7 ebenso im Eingriff wie der Mitnehmer 17A und die Nut 10E am unteren Schaft 10C der Antriebswelle 10. Durch eine Drehbewegung der Antriebswelle 10 mittels des nicht dargestellten Hilfswerkzeuges läßt sich das zu betätigende Teil bewegen, ohne daß der Bediener gegen den Widerstand des stromlosen Elektromotors 2 anarbeiten müßte. Da die Endlagen des zu betätigenden Teiles bezüglich der Schalteinrichtungen sich bei dieser Betätigungsart nicht verändern, kann die Betätigung bei einer Behebung des Mangels in der Spannungsversorgung unmittelbar mittels des Elektromotors 2 fortgesetzt werden, ohne daß eine Neujustierung der Schaltmittel erforderlich wäre.

Die erfindungsgemäße Antriebsvorrichtung stellt vereinigt die Vorteile einer kompakten und komfortablen Schalteinrichtung mit denen einer einfachen und wirkungsvollen Notbetätigungseinrichtung.

### Bezugszeichenliste

- 1: Antriebsvorrichtung
- 2: Elektromotor
- 3: Schneckenwelle
- 4: Schneckenrad
- 4A: Nuten
- 5: Gehäuse
- 5A: Gehäuse-Oberteil
- 5B: Gehäuse-Unterteil
- 6: Abtriebswellenlager
- 7: Abtriebswelle
- 8: Ritzel
- 9: Antriebskabel
- 10: Antriebswelle
- 10A: Bund
- 10B: oberer Schaft
- 10C: unterer Schaft
- 10D: Klauen
- 10E: Nut
- 11: Hohlraum (in 7)
- 12: Innenverzahnung
- 13: Hohlraum (in 10)
- 14: Außenverzahnung
- 15: Feder
- 16: Aufnahmeraum (in 6)
- 17: Exzenter
- 17A: Mitnehmer
- 18: Exzenterrad
- 19: Schaltrad
- 19A: Innenverzahnung
- 19B: Schaltnocken
- 20: Mikroschalter
- 20A: Schaltstößel
- 21: Aussparung

## Patentansprüche

1. Antriebsvorrichtung für ein zwischen Endstellungen verstellbares Teil eines Fahrzeuges, insbesondere für einen Deckel eines öffnungsfähigen Fahrzeugdaches mit einem Elektromotor (2), der über ein Untersetzungsgetriebe (3, 4) mit einem auf einer Abtriebswelle (7) angeordneten Ritzel (8) verbunden ist, das seinerseits über Kraftübertragungsmittel (9) mit dem verstellbaren Teil in Antriebsverbindung steht, sowie mit wenigstens einer den Elektromotor (2) steuernden Schalteinrichtung (20) zum Stillsetzen des Elektromotors (2) in wenigstens einer vorbestimmten Stellung des verstellbaren Teils, wobei zur Betätigung der Schalteinrichtung ein Schaltrad (19) eines Exzenterrädergetriebes (17, 18) mit dem Untersetzungsgetriebe (3,4) in Antriebsverbindung steht, **dadurch gekennzeichnet**, daß die Antriebswelle (10), der treibende Teil des Exzentergetriebes (17) sowie das Schneckenrad (4) formschlüssige Mittel (10E, 17A; 10D, 4A) aufweisen, die eine axiale Verschiebung der Antriebswelle (10) für eine Notbetätigung des Ritzels (8) bei gleichzeitiger Entkopplung von Schneckenrad (4) und Antriebswelle (10) ermöglichen, wobei gleichzeitig das Exzenterrädergetriebe (17,18,19) unverändert mit der Antriebswelle (10) im Eingriff bleibt.

2. Antriebsvorrichtung nach Anspruch 1, **dadurch gekennzeichnet**, daß die Antriebswelle (10) unabhängig von ihrer axialen Lage über formschüssige Mittel (14, 12) mit der Abtriebswelle (7) in Eingriff steht.

3. Antriebsvorrichtung nach einem der vorhergehenden Ansprüche, **dadurch gekennzeichnet**, daß die Antriebswelle (10) mittels einer Feder (15) zu ihrer Eingriffsposition mit dem Schneckenrad (4) hin vorbelastet ist.

4. Antriebsvorrichtung nach Anspruch 3, **dadurch gekennzeichnet**, daß Antriebswelle (10) und Abtriebswelle (7) an ihren einander zugewandten Stirnseiten jeweils einen Hohlraum (13 bzw. 11) aufweisen, von dem die Feder (15) zumindestens an ihren Enden umgeben ist.

5. Antriebsvorrichtung nach einem der vorhergehenden Ansprüche, **dadurch gekennzeichnet**, daß die Antriebswelle (10) in ihrem Mittelteil einen im Durchmesser erweiterten Bund (10A) aufweist, an dessen Außenumfang die formschüssigen Mittel (10D) zur Kopplung mit den komplementär dazu geformten Mitteln (4A) am Schneckenrad (4) angeordnet sind.

6. Antriebsvorrichtung nach Anspruch 5, **dadurch gekennzeichnet**, daß die Abtriebswelle (7) in einem fest in einem Gehäuseteil (5A) der Antriebsvorrichtung (1) angeordneten buchsenartigen Antriebswellenlager (6) gelagert ist, das an seiner der Antriebswelle (10) zugewandten Unterseite einen erweiterten Aufnahmeraum (16) für eine Aufnahme des Bundes (10A) bei einer axialen Verlagerung der Antriebswelle (10) aufweist.

7. Antriebsvorrichtung nach einem der vorhergehenden Ansprüche, **dadurch gekennzeichnet**, daß die Antriebswelle (10) an ihrer von der Abtriebswelle (7) abgewandten Stirnseite Mittel (21) für einen formschüssigen Eingriff eines Notbetätigungs-Werkzeuges aufweist.

## Claims

1. A drive device for a part of a vehicle which is displaceable between extreme positions, particularly for a cover of an openable vehicle roof, with an electric motor (2) connected via a reduction gear (3,4) to a pinion (8) disposed on an output shaft (7), the said pinion being connected for drive to the displaceable part via force transmitting means (9), and also with at least one switch device (20) for controlling the electric motor, for stopping the electric motor (2) in at least one predetermined position of the displaceable part, a switch wheel (19) of an eccentric wheel gear (17,18) and which is connected for drive to the reduction gear (3,4), characterised in that the drive shaft (10), the driving part of the eccentric gear (17) and the worm wheel (4) comprise form-locking means (10E,17A,10D,4A) which make possible an axial displacement of the drive shaft (10) for emergency operation of the pinion (8) while simultaneously decoupling it from worm wheel (4) and drive shaft (10), the eccentric wheel gear (17,18,19) at the same time remaining unchanged in its engagement with the drive shaft (10).

2. A drive device according to Claim 1, characterised in that form-locking means (14,12) allow the drive shaft (10) to remain engaged with the output shaft (7) regardless of the axial position of the said drive shaft (10).

3. A drive device according to one of the preceding Claims, characterised in that the drive shaft (10) is biased by a spring (15) towards its position of engagement with the worm wheel (4).

4. A drive device according to Claim 3, characterised in that drive shaft (10) and output shaft (7) each have at their facing ends respective cavities (13,11) which engage around at least the respective end of the spring (15).

5. A drive device according to one of the preceding Claims, characterised in that the drive shaft (10) has in its middle part an enlarged-diameter collar (10A) on the outer periphery of which are disposed the form-locking means (10D) for coupling with the matchingly shaped means (4A) on the worm wheel (4).

6. A drive device according to Claim 5, characterised in that the output shaft (7) is mounted in a bush-like drive shaft mounting (6) disposed rigidly in a housing part (5A) of the drive device (1) and which has on its underside, which is towards the drive shaft (10), a widened out receiving space (16) to accommodate the collar (10A) in the event of an axial displacement of the drive shaft (10).

7. A drive device according to one of the preceding Claims, characterised in that the drive shaft (10) has at its end remote from the output shaft (7) means (21) for form-locking engagement of an emergency actuating tool.

## Revendications

1. Dispositif d'entraînement pour un élément d'un véhicule pouvant se déplacer entre des positions finales, en particulier pour un plafond d'un toit ouvrant de véhicule, comprenant un moteur électrique (2), qui est relié au moyen d'une transmission de démultiplication (3, 4) à un pignon (8), disposé sur un arbre de sortie (7), qui est de son côté en liaison d'entraînement au moyen d'un organe de transmission de force (9) avec l'élément qui peut se déplacer, et comprenant au moins un dispositif de commande (20), qui actionne le moteur électrique (2), pour arrêter le moteur électrique (2) dans au moins une position prédéterminée de l'élément qui peut se déplacer, une roue de commande (19) d'une transmission à roue excentrique (17, 18) étant en liaison d'entraînement avec la transmission de démultiplication (3,4) pour actionner le dispositif de commande,
caractérisé en ce que
l'arbre d'entraînement (10), l'élément d'entraînement de la transmission à excentrique (17) et la roue tangente (4) présentent des organes à engagement par la forme (10 E, 17A; 10D, 4A), qui permettent d'avoir un coulissement axial de l'arbre d'entraînement (10) pour un actionnement d'urgence du pignon (8) lors du découplage simultané de la roue tangente (4) et de l'arbre d'entraînement (10), la transmission par roues excentriques (17, 18, 19) demeurant en même temps inchangée en prise avec l'arbre d'entraînement.

2. Dispositif d'entraînement selon la revendication 1,
caractérisé en ce que
l'arbre d'entraînement (10), indépendamment de sa position axiale est en prise au moyen d'organes à engagement par la forme (14, 12) avec l'arbre de sortie 7.

3. Dispositif d'entraînement selon l'une des revendications précédentes
caractérisé en ce que
l'arbre d'entraînement (10) est comprimé au préalable au moyen d'un ressort (15) en direction de sa position de venue en prise avec la roue tangente (4).

4. Dispositif d'entraînement selon la revendication 3,
caractérisé en ce que
l'arbre d'entraînement (10) et l'arbre de sortie (7) présentent sur leurs faces frontales, tournées l'une vers l'autre, respectivement une cavité (13 ou 11), par laquelle le ressort (15) est entouré, au moins à ses extrémités.

5. Dispositif d'entraînement selon l'une des revendications précédentes
caractérisé en ce que
l'arbre d'entraînement (10) présente dans sa partie médiane une collerette (10A) dont le diamètre est plus large, sur le pourtour extérieur de laquelle sont disposés sur la roue tangente (4) les organes d'engagement par la forme (10D) servant à l'accouplement avec les organes (4A), formés pour cela de façon complémentaire.

6. Dispositif d'entraînement selon la revendication 5,
caractérisé en ce que
l'arbre de sortie (7) est monté dans un palier de l'arbre d'entraînement (6), en forme de manchon, disposé de façon solidaire dans une partie de boîtier (5A) du dispositif d'entraînement (1), qui présente sur sa face inférieure, tournée vers l'arbre d'entraînement (10), une chambre de réception élargie (16) pour un logement de la collerette (10A) lors d'un déplacement axial de l'arbre d'entraînement (10).

7. Dispositif d'entraînement selon l'une des revendications précédentes,
caractérisé en ce que
l'arbre d'entraînement (10) présente sur sa face frontale, située à l'opposé de l'arbre de sortie (7), des moyens (21) permettant la venue en prise par engagement par la forme d'un outil à utiliser en cas d'urgence.
